# EUROPÄISCHE PATENTANMELDUNG

(11) **EP 2 012 050 A2**
(43) Veröffentlichungstag der Anmeldung: **07.01.2009**
(21) Anmeldenummer: 08011887.0
(22) Anmeldetag: 02.07.2008
(51) Int. Cl.: F16K 31/60

(54) **Drehgriff**

(30) Priorität: 04.07.2007 DE 102007031212
(71) Anmelder: Grohe AG, 58675 Hemer (DE)
(72) Erfinder: Keiter, Dieter, 58708 Menden (DE); Riedel, Björn, 44795 Bochum (DE); Pehl, Michael, 58708 Menden (DE); Dreischmeier, Lars, 58706 Menden (DE)

(57) **Zusammenfassung**

Bei einem Drehgriff, insbesondere für ein Funktionsteil (5) von Sanitärarmaturen, mit einem das Funktionsteil (5) abdeckenden Bedienelement (1) und einem mit dem Bedienelement (1) verbundenen Nabenteil (4), das formschlüssig auf eine Spindel (51) des Funktionsteils (5) aufschiebbar ist, ist vorgesehen, dass zur Befestigung des Drehgriffs zwischen Bedienelement (1) und Nabenteil (4) ein Halter (2) angeordnet ist, der das Bedienelement (1) gegenüber dem Funktionsteil (5) axial festlegt, wobei das Bedienelement (1) auf dem Halter (2) drehbar gelagert und das Bedienelement (1) mit dem Nabenteil (4) fest verbunden ist.

## Beschreibung

Die Erfindung betrifft einen Drehgriff, insbesondere für Funktionsteile von Sanitärarmaturen, gemäß dem Oberbegriff des Patentanspruchs 1.

Es gibt eine Vielzahl von Möglichkeiten, wie Griffe an einer Sanitärarmatur beziehungsweise an Funktionsteilen, wie Ventiloberteilen oder Thermostanten, von Sanitärarmaturen angebracht werden können. Üblicherweise weisen die Griffe Öffnungen auf, durch die eine Schraube an der Drehspindel des Ventils oder Ventiloberteils angreifen. Beispielsweise kann eine Schraube durch eine radial verlaufende Bohrung am Drehgriff die Drehspindel radial angreifen. Ebenfalls bekannt sind Befestigungsmöglichkeiten, bei denen die Schraube schräg zur Längsachse einer Spindel verläuft. Eine weitere bekannte Befestigungsmöglichkeit besteht darin, dass der Griff eine axiale Gewindebohrung aufweist und der Griff mit Hilfe einer Schraube angeschraubt wird, die durch die Öffnung des Griffs hindurch in die Spindel hineinläuft. Eine derartige Lösung ist in der DE 100 21 600 A1 aufgezeigt. Nachteilig an diesen Lösungen ist, dass die Bohrung für die Schraube im Griff entweder offen bleibt oder mit einer zusätzlichen Kappe, die über der Öffnung eingerastet wird, abgedeckt werden muss.

Eine andere Möglichkeit der Befestigung von Griffen ist aus der DE 38 34 459 A1 bekannt. Hier weist der Griff an seiner Unterseite mehrere Kunststoffrastteile auf, die die Spindel des Ventiloberteils hülsenförmig übergreifen und mit dieser verrasten, so dass der Griff an der Spindel festgelegt ist.

Weiterhin ist aus der DE 21 39 638 eine Steckbefestigung für Drehgriffe bekannt. Nachteilig an all den bekannten Griffen ist, dass die Griffe sichtbare Eingrifföffnungen für Werkzeuge aufweisen, beziehungsweise diese Öffnungen durch Kappen etc. abgedeckt werden müssen, oder dass die Griffe von Außen von dem Ventiloberteil ohne Einsatz von Werkzeugen abgezogen werden können.

Aufgabe der Erfindung ist daher, eine verbesserte Griffbefestigung für nicht abziehbare Drehgriffe herzustellen.

Zur Lösung der Aufgabe wird mit der Erfindung ein Drehgriff, insbesondere für ein Funktionsteil von Sanitärarmaturen, mit einem das Funktionsteil abdeckenden Bedienelement, und einem mit dem Bedienelement verbundenen Nabenteil, das formschlüssig auf eine Spindel des Funktionsteils aufschiebbar ist, bereitgestellt. Hierbei ist zur Befestigung des Drehgriffs zwischen Bedienelement und Nabenteil ein Halter vorgesehen, der das Bedienelement gegenüber dem Funktionsteil axial festlegt, wobei das Bedienelement auf dem Halter drehbar gelagert und das Bedienelement mit dem Nabenteil drehfest verbunden ist. Dadurch, dass der Halter das Bedienelement an dem Funktionsteil festlegt, ist kein weiteres Befestigungsmittel in Form einer Schraube etc. notwendig, das von außen montiert werden muss.

Vorteilhaft ist dabei, wenn der ringförmige Halter mittels eines Gewindes auf einem Außenrohr des Funktionsteils befestigt ist. Der Halter weist dabei einen nach Innen gerichteten Flansch auf, der mit einem Falz in dem Nabenteil zusammenwirkt und dieses somit axial fixiert. Da das Nabenteil mit dem Bedienelement verbunden ist, ist somit auch das Bedienelement axial gegenüber dem Funktionsteil festgelegt.

Eine Weiterbildung der Erfindung sieht vor, dass das Nabenteil hierbei innerhalb des Außenrohrs des Funktionsteils angeordnet ist. Weiterhin ist vorgesehen, dass zwischen dem Bedienelement und dem Halter ein Gleitring angeordnet ist. Dadurch wird die Drehbewegung des Bedienelements auf dem Halter erleichtert. Hierzu weist das Bedienelement eine Ausnehmung beziehungsweise eine Nut auf, die den Gleitring aufnehmen kann. Somit ist der Gleitring von Außen nicht sichtbar.

Gemäß einer Weiterbildung der Erfindung sind Bedienelement, Nabenteil und Halter als Baueinheit vorgesehen. Hierbei wird zunächst der Halter von unten gegen das Bedienelement Haube gedrückt, wobei der Gleitring dazwischen angeordnet sein kann. Anschließend wird von unten das Nabenteil gegen den Halter und in das Bedienelement geschoben. Dazu weist das Bedienelement eine Bohrung mit einer Riefenverzahnung und das Nabenteil einen passenden Stutzen mit Riefenverzahnung auf. Weiterhin wird zur Sicherung der Baueinheit aus Halter, Nabenteil und Bedienelement eine Schraube vorgesehen, die von unten durch eine axiale Öffnung des Nabenteils geführt wird und in eine Bohrung im Bedienelement eingreift.

Somit ist die Verbindung von Griff und Nabenteil nicht sichtbar und kann auch durch Ziehen nicht gelöst werden.

Vorteilhaft ist weiterhin, wenn der Halter Ansatzpunkte für Werkzeuge, wie Schraubenschlüssel, aufweist, damit die Befestigung an dem Außenrohr des Funktionsteils leichter vonstatten geht. Gemäß einer vorteilhaften Weiterbildung der Erfindung sind Zierringe im äußeren Bereich des Drehgriffs vorgesehen, die auf dem Halter aufliegen und die Fuge zwischen Drehgriff und Halter oder die Fuge zwischen Drehgriff, Gleitring und Halter und / oder die Ansatzpunkte für die Werkzeuge am Halter abdecken.

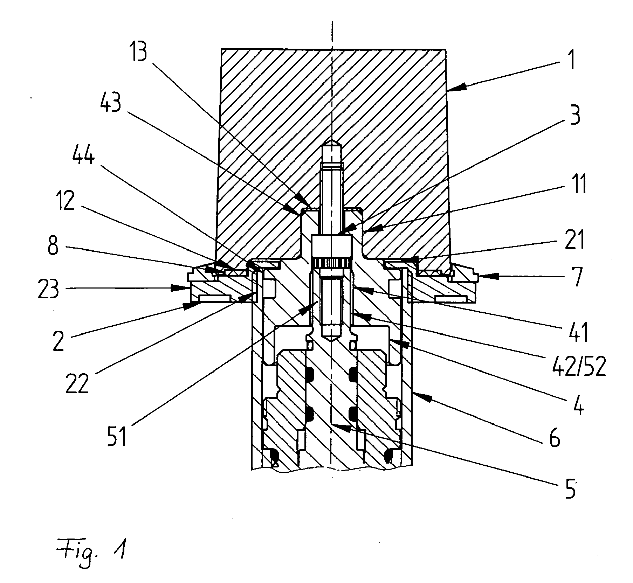

Ausführungsbeispiele der Erfindung sind in der Zeichnung dargestellt und werden im Folgenden näher beschrieben. Es zeigt in der Zeichnung
- Figur 1: einen Schnitt durch einen erfindungsgemäßen Drehgriff.

Figur 1 zeigt ein Funktionsteil in Form eines Ventiloberteils 5 mit der dazugehörigen Spindel. Ventiloberteil 5 und Spindel 51 sind dabei von einem Außenrohr 6 umgeben. Zur Betätigung der Spindel 51 ist zunächst ein Nabenelement 4 vorgesehen, das eine Bohrung 41 aufweist, so dass das Nabenteil 4 auf die Spindel 51 aufgesteckt werden kann. Zur drehfesten Verbindung ist sowohl an der Spindel 51 als auch an der Innenseite der Bohrung im Nabenteil eine Riefenverzahnung 52, 42 vorgesehen. Oberhalb des Nabenteils 4 und ebenfalls drehfest über eine Riefenverzahnung 11, 43 mit diesem verbunden befindet sich ein Bedienelement 1. Die geometrische Form des Bedienelements 1 kann dabei frei gestaltet werden, vorteilhafterweise weist eine nach außen geschlossene Form, wie beispielsweise eine Haube, ein Knauf etc. auf. Zwischen dem Bedienelement 1 und dem Nabenelement 4 ist ein Halter 2 angeordnet. Dieser Halter 2 weist nach Innen gerichtete Flansche 21 auf, die mit einem Falz 44 an dem Nabenteil 4 zusammenwirken und somit das Nabenteil 4 an dem Außenrohr 6 des Ventils festlegen. Bei einer Drehung des Bedienelements 1 werden somit auch das Nabenteil 4 und damit die Spindel 51 verdreht. Zur zugfesten Verbindung zwischen Nabenteil 4 und Bedienelement 1 ist zusätzlich eine Schraubverbindung vorgesehen. Zur Vermeidung von Reibung zwischen Bedienelement 1 und Halter 2 ist in einer Nut 12 des Bedienelements 1 ein Gleitring 8 angeordnet. Weiterhin ist das Bedienelement 1 so ausgeformt, dass auch nur im Bereich der Unterkante des Bedienelements und über den Gleitring 8 Kontakt zum Halter 2 besteht.

Bei der Montage des Drehgriffs wird zunächst der Gleitring 8 in die Aufnahmenut 12 des Bedienelements 1 eingelegt und dieses mit dem Halter 2 zusammengefügt. Anschließend wird das Nabenteil 4 von unten in eine Aufnahmeöffnung 13 des Bedienelements 1 geschoben, wodurch der Halter 2 gegen das Bedienelement 1 gepresst wird. Zur Fixierung der Einzelbauteile wird eine Schraube 3 von unten durch die Öffnung 41 des Nabenteils 4 in das Bedienelement 1 eingedreht. Somit wird eine Baueinheit aus Bedienelement 1, Gleitring 8, Halter 2 und Nabenteil 4 gebildet.

Diese Baueinheit kann nun auf das Außenrohr 6 des Ventils aufgeschraubt werden, da der Halter 2 eine kreisförmige Öffnung mit einem Innengewinde 22 aufweist, das mit einem Außengewinde am Außenrohr 6 korrespondiert.

Zur besseren Handhabbarkeit des Halters 2 beim Verschrauben sind mehrere Werkzeugansatzpunkte 23 an der Unterseite des Halters 2 vorgesehen, in die ein Werkzeug von oben eingreifen kann. Nach dem Fixieren des Drehgriffs am Ventil können Zierringe 7 an dem Griff angebracht werden. Diese Zierringe 7 verdecken einerseits die Fugen zwischen Bedienelement 1 und Halter 2, als auch den Halter 2 insgesamt.

### Bezugszeichenliste

- 1: Bedienelement
- 11: Riefenverzahnung
- 12: Nut
- 13: Aufnahmeöffnung
- 2: Halter
- 21: Flansch
- 22: Innengewinde
- 23: Werkzeugansatzpunkte
- 3: Schraube
- 4: Nabenteil
- 41: Öffnung
- 42: Riefenverzahnung (gegenüber Spindel)
- 43: Riefenverzahnung (gegenüber Haube)
- 44: Falz
- 5: Ventiloberteil
- 51: Spindel
- 52: Riefenverzahnung
- 6: Außenrohr
- 7: Zierring
- 8: Gleitring

## Patentansprüche

1. Drehgriff, insbesondere für ein Funktionsteil (5) von Sanitärarmaturen,
- mit einem das Funktionsteil (5) abdeckenden Bedienelement (1) und
- einem mit dem Bedienelement (1) verbundenen Nabenteil (4), das formschlüssig auf eine Spindel (51) des Funktionsteils (5) aufschiebbar ist,
**dadurch gekennzeichnet, dass**
zur Befestigung des Drehgriffs zwischen Bedienelement (1) und Nabenteil (4) ein Halter (2) vorgesehen ist, der das Bedienelement (1) gegenüber dem Funktionsteil (5) axial festlegt, wobei das Bedienelement (1) auf dem Halter (2) drehbar gelagert und das Bedienelement (1) mit dem Nabenteil (4) fest verbunden ist.

2. Drehgriff gemäß Anspruch 1, **dadurch gekennzeichnet, dass** der Halter (2) mittels eines Gewindes (22, 61) auf einem Außenrohr (6) des Funktionsteils befestigt ist.

3. Drehgriff gemäß Anspruch 1 oder 2, **dadurch gekennzeichnet, dass** das Nabenteil (4) drehbar innerhalb des Außenrohrs (6) angeordnet ist.

4. Drehgriff gemäß einem der vorhergehenden Ansprüche, **dadurch gekennzeichnet, dass** zwischen Bedienelement (1) und Halter (2) ein Gleitring (8) vorgesehen ist.

5. Drehgriff gemäß einem der vorhergehenden Ansprüche, **dadurch gekennzeichnet, dass** Bedienelement (1) , Nabenteil (4) und Halter (2) eine Baueinheit bilden.

6. Drehgriff gemäß einem der vorhergehenden Ansprüche, **dadurch gekennzeichnet, dass** Bedienelement (1) mit Nabenteil (4) über eine Riefenverzahnung (11, 43) miteinander verbunden sind.

7. Drehgriff gemäß einem der vorhergehenden Ansprüche, **dadurch gekennzeichnet, dass** zur Verbindung von Halter (2) , Nabenteil (4) und Bedienelement (1) eine Schraube (3) vorgesehen ist.

8. Drehgriff gemäß Anspruch 7, **dadurch gekennzeichnet, dass** die Schraube (3) von unten in das Bedienelement (1) einschraubbar und damit von außen nicht sichtbar ist.

9. Drehgriff gemäß einem der vorhergehenden Ansprüche, **dadurch gekennzeichnet, dass** der Halter (2) Ansatzpunkte (23) für Werkzeuge aufweist.

10. Drehgriff gemäß einem der vorhergehenden Ansprüche, **dadurch gekennzeichnet, dass** der Halter (2) von einem Zierring (7) abgedeckt ist.

11. Drehgriff gemäß einem der vorhergehenden Ansprüche, **dadurch gekennzeichnet, dass** das Bedienelement (1) einstückig ist.
